# EUROPEAN PATENT APPLICATION

(11) **EP 4 512 926 A1**
(43) Date of publication of application: **26.02.2025**
(21) Application number: 23193973.7
(22) Date of filing: 29.08.2023
(51) Int. Cl.: C23C 18/12

(54) **A PHOTONIC LAYER DOPED WITH NANOPARTICLES AND A METHOD FOR OBTAINING SAID PHOTONIC LAYER**

(30) Priority: 24.08.2023 PL 44589323
(71) Applicant: Siec Badawcza Lukasiewicz - PORT Polski Osrodek Rozwoju Technologii, 54-066 Wroclaw (PL)
(72) Inventor: Zdonczyk, Maria, 51-122 Wroclaw (PL); Potaniec, Bartlomiej, 50-525 Wroclaw (PL); Cybinska, Joanna, 54-152 Wroclaw (PL)
(74) Representative: JWP Patent & Trademark Attorneys

(57) **Abstract**

The object of the present invention is a photonic layer with a sol-gel structure containing a matrix doped with nanoparticles of lanthanide phosphates and a method for obtaining the photonic layer with the sol-gel structure doped with nanoparticles of lanthanide phosphates, characterised in that it comprises a step in which alkoxysilane is hydrolysed and silanol or alkoxysilane is condensed, lanthanide nanophosphates are prepared *in situ* and a durable photonic layer is prepared.

## Description

The object of the present invention is a sol-gel photonic layer doped with nanoparticles of lanthanide phosphates and a method for obtaining a photonic layer with a sol-gel structure doped with nanoparticles of lanthanide phosphates.

The preparation of stable and reproducible luminescent active layers is a necessary condition for such layers to be useful in any application.

Attempts are usually made to dope silica systems with organic dyes using a sol-gel method. However, a limitation of this approach is the fact that one of the final stages of obtaining the luminescent layers used is the need to anneal them to a temperature of at least 300°C, and at this temperature many compounds undergo thermal degradation.

An alternative to organic compound doping may be the use of inorganic compounds, which, however, have limited solubility under sol-gel synthesis conditions, and suspending material particles of several micrometers in size in the sol leads to obtaining low homogeneity systems.

Due to their particle sizes, nanomaterials exhibit high, homogeneous distribution in the matrix into which they are incorporated. In addition, they have high degradation temperatures, which makes them seem to be ideal materials for use as luminophores.

Nanomaterials are characterised by a tendency to form agglomerates, which is associated with a large specific surface area of grain boundaries. They display a faster occurrence of phase transitions, an increase in hardness and plasticity compared to microcrystalline materials. Their large specific surface area determines their optical and physicochemical properties [1,2], and the interaction of nanomaterials with electromagnetic radiation depends on grain sizes, the dope used or surface characteristics. Due to the size of luminophore grains (nanometric scale), they can be called nanoluminophores.

Commonly known nanoluminophores are rare earth phosphates. They are luminescent due to the presence of ion activators, i.e. lanthanides, in the host lattice. Thus, their properties make them attractive materials for luminescent and photonic applications [3]. They exhibit the phenomenon of luminescence, i.e. spontaneous emission of electromagnetic radiation, unrelated to the heating of the material to a high temperature. Depending on the rare earth element ion used, it is possible to obtain different spectral regions of emission and absorption for the final material, in the spectral ranges from UV through Vis, to infrared radiation.

The sol-gel method is well documented in the prior art and consists in the transition of the sol into the gel, i.e. the dehydration of the colloidal solution into the gel, and then the condensation of the material. The first step is the hydrolysis of metal alkoxide in the presence of acid or base. The next step is polycondensation, as a result of which the reaction mixture changes from liquid to gel through the removal of water molecules in the solution [4]. This synthesis allows to obtain a number of materials from oxides to organic-inorganic hybrids in the form of multifunctional ceramic materials in which the host lattice (matrix) is silicon oxide (SiO₂). The main advantage of preparing materials with this method is the possibility to use cheap methods for obtaining thin layers (e.g. dip-coating, spin-coating) or ceramic materials, e.g. in the form of xerogels, at a relatively low cost.

For photonics, in the context of developing image acquisition and processing technique, the ability to functionalize the material by using appropriate activators is particularly important. In this case, the designing of a material with specific properties, not only spectroscopic, but also physicochemical ones, plays a key role.

The incorporation of nanoparticles into the sol-gel system provides such a possibility and can be done, for example, by incorporating finished particles into a high-density sol or impregnating the finished gel with a colloidal suspension of particles. However, luminescence quenching may occur in both approaches, which is particularly unfavourable.

A solution to this problem may be to precipitate nanoparticles *in situ* using an ionic liquid as a precipitation reagent. In the prior art, there are reports on the use of an ionic liquid both as a stabilizer of the nanoparticles being formed [8] and as a precipitation reagent [9].

Prior art organic-inorganic complexes precipitated with the *in situ* method have been excluded from practical applications due to their poor thermal stability and mechanical properties. Some scientific teams have worked on composites containing complexes in the polymer matrix [11-12]. Although studies have shown improvements as regards mechanical properties, low photostability and poor thermal stability limit their use.

US8066908B2 discloses a method of preparing a nanoparticle film in the form of a lanthanide-doped sol-gel matrix having a high luminescence signal to noise ratio. It also discloses a method of preparing light emitting sol-gel films made with lanthanide doped nanoparticles for the production of white light. The method comprises selecting lanthanides for the production of at least one of green, red and blue light when excited with near infrared light, preparing nanoparticles comprising the selected lanthanides, stabilizing the nanoparticles with ligands which are able to stabilize the nanoparticles in an aqueous solution and are selected to be substantially removed from the sol-gel matrix film during synthesis, including the stabilized nanoparticles into a sol-gel matrix and heating to increase the luminescence signal to noise ratio by substantially removing the low molecular weight organic molecules. Additionally, light emitting sol-gel films made with lanthanide doped nanoparticles are disclosed.

US7550201B2 discloses a photonic material, comprising a core and an envelope, for use in telecommunications, diagnostics, imaging and other applications. In its simplest form, the core comprises at least one nanoparticle. The nanoparticle comprises an inorganic material and at least one luminescent ion, wherein the inorganic material is suitably selected to bind the luminescent ion. The envelope comprises an appropriately selected organic stabilizing layer that overlays the core. The core and the envelope may have a shell located between them.

US7771619B2 discloses optically transparent composite materials in which solid solution inorganic nanoparticles are dispersed in an inert matrix, wherein the nanoparticles are doped with one or more active ions at a level up to about 60 mole % and consist of particles having a dispersed particle size between about 1 and about 100 nm, and the composite material with the nanoparticles dispersed therein is optically transparent to wavelengths at which excitation, fluorescence or luminescence of the active ions occur. Also disclosed are luminescent devices comprising composite materials.

US20080176076A1 discloses a functionalized nanoparticle which includes a nanoparticle synthesized from a mixture comprising lanthanide ions, a coating of silica or related materials, and a presenting substrate. The presenting substrate can be conjugated to the nanoparticle to functionalize the nanoparticle. The functionalized nanoparticle has a diameter smaller than approximately 350 nm.

WO 2004/066346A2 discloses a doped semiconductor nanocrystal layer comprising (a) a group IV oxide layer which is free of ion implantation damage, (b) from 30 to 50 atomic percent of a semiconductor nanocrystal distributed in the group IV oxide layer, and (c) from 0.5 to 15 atomic percent of one or more rare earth elements, the one or more rare earth elements being (i) dispersed on the surface of the semiconductor nanocrystal and (ii) distributed substantially equally through the thickness of the group IV oxide layer. The application also discloses a semiconductor structure comprising the above semiconductor nanocrystal layer and processes for preparing the semiconductor nanocrystal layer. In addition, photonic devices employing novel materials are disclosed. The invention discloses a doped semiconductor powder comprising group IV semiconductor nanocrystals and a rare earth element, the rare earth element being dispersed on the surface of the group IV semiconductor nanocrystals. The invention also discloses processes for preparing the above doped semiconductor powder, a composite material comprising a matrix in which the doped semiconductor powder is dispersed, and photonic devices comprising doped semiconductor powders and doped semiconductor layers.

Extensive research has also been carried out on the incorporation of Eu³⁺ or Tb³⁺ complexes with β-diketones, aromatic carboxylic acids or heterocyclic ligands in various sol-gel matrices [13-17]. Obtained composites could be processed in the form of films or monoliths. The problems observed for materials synthesized by the sol-gel method include, among others, the weakening of luminescent properties due to the dilution of activator ion concentration in the matrix. A concentration limit was also observed for the incorporation of complexes without loss of mechanical properties of matrices. In addition, applications are problematic due to the fact that the material is translucent or opaque, which makes them impossible to be employed in photonics. One of the fundamental requirements of many photonic devices is optical transparency in a set spectral range.

Orthophosphates are excellent matrices for activator ions due to their high chemical and thermal stability, high refractive index (1.7-1.8) [5] and low solubility in water [6].

However, no reports on the *in situ* preparation of lanthanide phosphates in a silica matrix using an ionic liquid as a precipitation reagent have been found in the prior art. There are also no known reports on the method for preparing the material allowing to obtain a highly transparent material doped with lanthanide phosphates.

Thus, the object of the invention is to develop a material with high transparency and purity, and a method for obtaining it by preparing *in situ* lanthanide phosphates in a silica matrix with the use of an ionic liquid as a precipitation reagent.

The invention solves said technical problem by using an ionic liquid as a precipitation reagent containing a phosphate anion in its structure. The incorporation of the ionic liquid into the reaction mixture allows to obtain materials with high purity and a low degree of agglomeration. The cation of the ionic liquid may also affect the morphology of nanomaterial grains, and the use of various ionic liquids helps affect the final shape of nanoparticles [10].

The object of the invention is a photonic layer with a sol-gel structure and comprising a matrix doped with nanoparticles of inorganic lanthanide compounds, characterised in that the material matrix is silicon oxide, while the inorganic lanthanide compounds are lanthanide phosphates at a concentration ranging between 0.1 wt % to 5 wt % relative to silicon oxide, wherein the nanoparticles have been prepared *in situ* with the use of an ionic liquid comprising a dihydrogen phosphate anion. Lanthanum phosphate is to be understood as lanthanum orthophosphate.

Preferably, the lanthanide phosphate is selected from the group comprising: europium phosphate, terbium phosphate, gadolinium phosphate, or mixtures thereof.

Preferably, europium phosphate at a concentration of 3 wt % is used, wherein the photonic layer exhibits radiation emission in the wavelength range of 575 - 725 nm when excited with radiation at a wavelength in the range of 250 - 325 nm, 350 - 420 nm.

Preferably, terbium phosphate at a concentration of 3 wt % is used, wherein the photonic layer exhibits radiation emission in the wavelength range of 475 - 530 nm when excited with radiation at a wavelength in the range of 250 - 390 nm.

Preferably, gadolinium phosphate at a concentration of 5 wt % doped with neodymium at a concentration of 3 mol % relative to Gd (Gd_{0.97}Nd_{0.03}PO₄) is used, wherein the photonic layer exhibits radiation emission in the wavelength range of 850 - 950 nm when excited with radiation at a wavelength of 275 nm.

Preferably, the photonic layer according to the invention is characterised in that it is transparent.

Preferably, the photonic layer is in the form of xerogel deposited on a substrate selected from a group comprising silicon and glass substrates.

A further object of the invention is a method for obtaining the photonic layer as defined in any one of claims 1-7, characterised in that it comprises the following steps:
a) hydrolysing alkoxysilane and condensing the prepared product in an acidic environment in ethanol to prepare a sol, wherein a volume ratio of alcohol to alkoxysilane is 1: 1;
b) adding to the sol obtained in step a) an ionic liquid at a concentration of 0.02 mol/dm³ - 0.03 mol/dm³ and containing a dihydrogen phosphate anion in a mixture of ethyl alcohol and water in a volume ratio of 2: 1;
c) adding to the sol obtained in step b) a lanthanide salt at a concentration of 0.1 wt % to 5 wt % of the lanthanide salt relative to the silicon;
d) applying the resulting material of step c) to a substrate to prepare the photonic layer; wherein in steps a) - c) the reaction was carried out with stirring.

Preferably, the acidic environment in step a) means pH of the solution in the range of 2.0 - 3.0 obtained using a 0.01 M hydrochloric acid solution.

Preferably, alkoxide is tetraethoxysilane.

Preferably, the ionic liquid is selected from the group comprising: choline dihydrogen phosphate and imidazole dihydrogen phosphate.

Preferably, the lanthanide salt is selected from the group comprising lanthanide phosphate and nitrate, wherein the lanthanide is selected from the group comprising: europium, gadolinium, terbium, or mixtures thereof.

Preferably, in step d), a material in the form of xerogel is prepared.

Preferably, step a) was carried out for 1 to 3 hours with stirring at 400 - 600 rpm; step b) for 15 to 45 minutes with stirring at 400 - 600 rpm; step c) for 11 to 14 hours with stirring at 800 - 1200 rpm; wherein steps a) to d) are carried out at room temperature, in air atmosphere.

Preferably, the substrate is selected from the group comprising glass and silicon substrates.

A major advantage of the present invention is the possibility to obtain a highly transparent material, retaining luminescent properties of a corresponding lanthanide phosphate with the use of readily available reagents. In addition, depending on the needs, the material can be obtained in various forms, i.e. as xerogel (transparent ceramics) or a thin layer on a selected material.

The invention is illustrated in the drawing, in which:
**Figure 1** presents a comparison of the diffractogram obtained for EuPO₄ precipitated using the method described in the invention, without annealing, and a standard diffractogram for EuPO₄ crystallizing in group *P6₂22* (PDF #04-019-5408).
**Figure 2** depicts the excitation spectrum recorded for EuPO₄ precipitated using the method described in the invention.
**Figure 3** shows the emission spectrum (for λ_{exc} = 393 nm) recorded for EuPO₄ precipitated using the method described in the invention.
**Figure 4** shows a) a photograph of the final material doped with EuPO₄ without excitation with a UV lamp; b) a photograph of the final material doped with EuPO₄ with excitation with a UV lamp (λₑₓ = 360 nm).
**Figure 5** presents a comparison of the diffractogram obtained for Gd_{0.97}Nd_{0.03}PO₄ precipitated using the method described in the invention, without annealing, and a standard diffractogram for GdPO₄ (PDF #39-232).
**Figure 6** depicts the excitation spectrum recorded for Gd_{0.97}Nd_{0.03}PO₄ precipitated using the method described in the invention.
**Figure 7** shows the emission spectrum (for λ_{exc} = 275 nm) recorded for Gd_{0.97}Nd_{0.03}PO₄ precipitated using the method described in the invention.
**Figure 8** presents a comparison of the diffractogram obtained for TbPO₄ precipitated using the method described in the invention, without annealing, and a standard diffractogram for GdPO₄crystallizing in group C2 (PDF #04-024-6404).
**Figure 9** depicts the excitation spectrum recorded for TbPO₄ precipitated using the method described in the invention.
**Figure 10** shows the emission spectrum (for λ_{exc} = 255 nm) recorded for TbPO₄ precipitated using the method described in the invention.

The present invention is illustrated in the following embodiments:

### A general procedure for obtaining a photonic layer according to the invention

The photonic layer according to the invention is a matrix of silicon oxide (SiO₂) synthesized by the sol-gel method and a dope of lanthanide orthophosphate precipitated by the *in situ* method in the silica matrix.

In this application, the term "lanthanum phosphate" is to be understood as lanthanide orthophosphate.

The first step is a sol-gel synthesis involving successive reactions of alkoxysilane hydrolysis and the polycondensation of the resulting product, which synthesis is carried out at room temperature in air atmosphere. To this end, 2 ml of tetraethoxysilane (TEOS), 2 ml of ethyl alcohol and 0.01 M hydrochloric acid are placed in a vial equipped with a magnetic core to obtain the pH of the reaction mixture at 2.5. The reaction mixture is then stirred for 2 h at 500 rpm.

Then, a solution of 0.02 mol/dm³ - 0.03 mol/dm³ ionic liquid in a mixture of ethyl alcohol and water (EtOH:H₂O volume ratio of 2:1) is added to the vial. The reaction mixture is left closed on a magnetic stirrer at 500 rpm for 30 min.

The ionic liquid may be any ionic liquid comprising a dihydrogen phosphate anion and an organic or inorganic cation.

In the third step, a solution of lanthanide salt (nitrate or phosphate, respectively) at a concentration of 0.1 wt % to 5 wt % relative to silicon in a mixture of ethyl alcohol and water (volume ratio of 2:1) is added to the reaction mixture. The sealed vial is left to stir for 12 h, with the number of rotations increased to 1000 rpm.

In the final step, the sol is poured into smaller vials or applied to a glass substrate (any glass substrate, e.g. a microscope slide made of soda-lime or silicon glass) or a silicon plate using the spin coating method. The final product is both a transparent macro and micro layer on the substrate.

### Example 1 A doped photonic layer (EuPO₄)

A photonic layer was obtained according to the general procedure, using choline dihydrogen phosphate as an ionic liquid, and EuPO₄ as a lanthanide salt. The used weight concentration of the lanthanide salt relative to the silicon was 3 wt %.

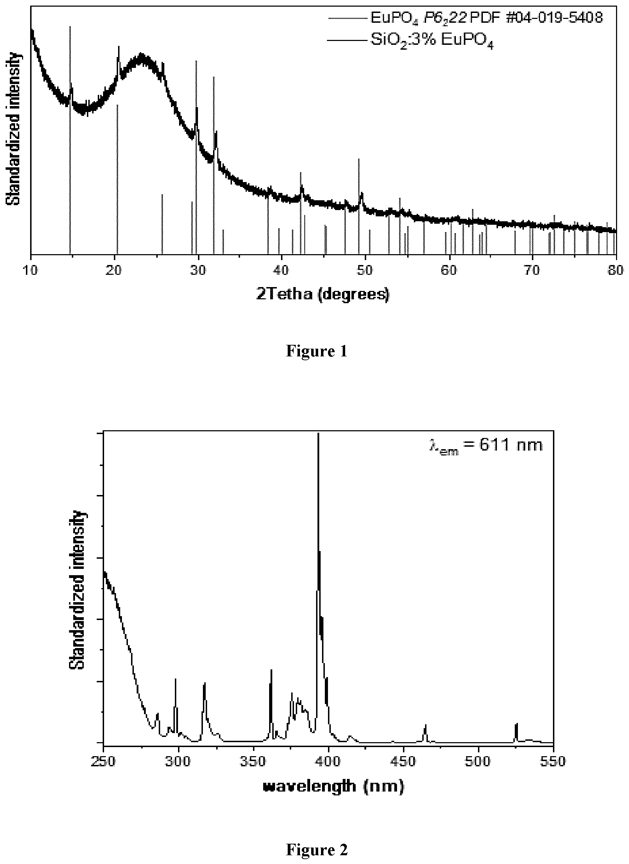

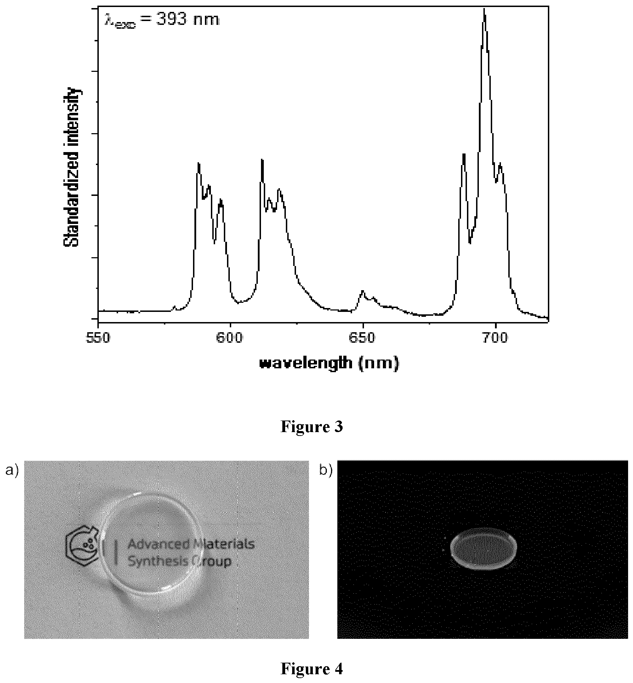

Following synthesis, the sample obtained was ground in an agate mortar. An XRD diffraction measurement was performed, and the diffractogram obtained was compared to a standard diffractogram for EuPO₄ PDF # 04-019-5408. The result is shown in Figure 1. The luminophore obtained in the above synthesis emits light in the range of 575 - 725 nm when excited with radiation in the range of 250 - 325 nm, 350 - 420 nm. Spectroscopic characteristics are shown in Figures 2-3, and an exemplary photograph of the material is shown in Figure 4. Red luminescence is the result of characteristic 4f-4f transitions of europium ions.

**Example 2** A photonic layer doped with gadolinium orthophosphate precipitated with the *in situ* method and doped with neodymium at a concentration of 3 mol % relative to Gd (Gd_{0.97}Nd_{0.03}PO₄). The used weight concentration of the lanthanide salt relative to the silicon was 5 wt %.

The photonic layer was obtained according to the general procedure, using choline dihydrogen phosphate as an ionic liquid, and gadolinium nitrate hexahydrate and neodymium nitrate hexahydrate as a lanthanide salt.

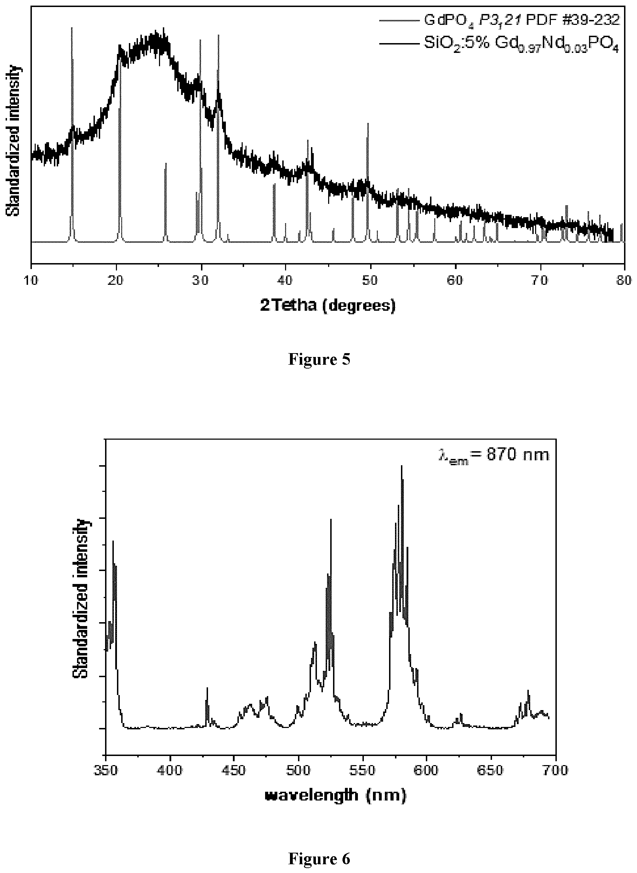

Following synthesis, the sample obtained was ground in an agate mortar. An XRD diffraction measurement was performed, and the diffractogram obtained was compared to a standard diffractogram for GdPO₄ PDF #39-232. The luminophore obtained in the above example emits light in the range of 850 - 950 nm at an excitation of 275 nm. The result is shown in Figure 5. Spectroscopic characteristics are shown in Figures 6-7.

### Example 3 A photonic layer doped with terbium orthophosphate (TbPO₄)

The photonic layer was obtained according to the general procedure, using imidazole dihydrogen phosphate as an ionic liquid, and terbium nitrate hexahydrate as a lanthanide salt. The used weight concentration of the lanthanide salt relative to the silicon was 3 wt %.

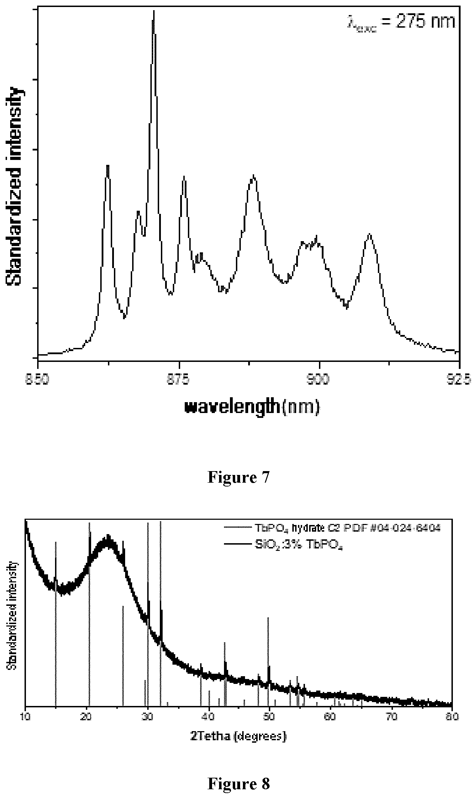

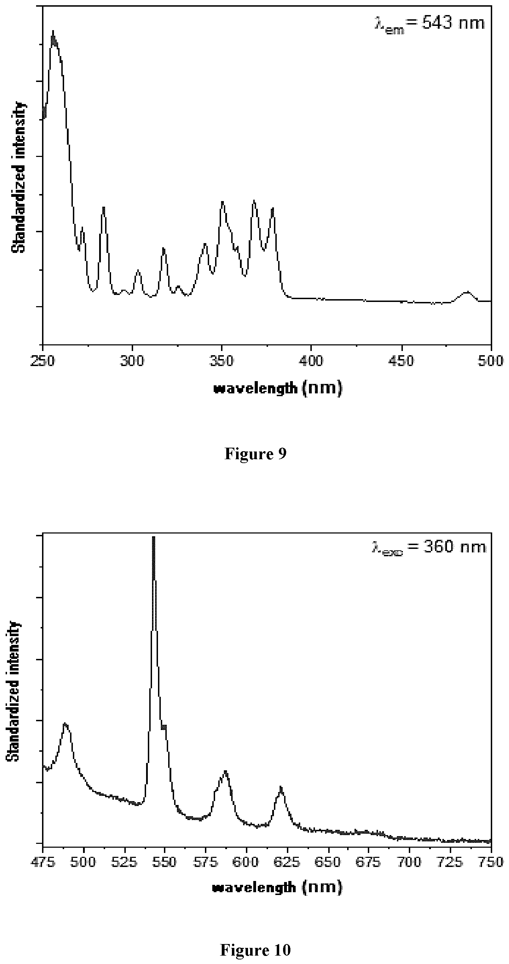

The final product was a transparent xerogel. Following synthesis, the sample obtained was ground in an agate mortar. An XRD diffraction measurement was performed, and the diffractogram obtained was compared to a standard diffractogram for TbPO₄ PDF #04-024-6404. The result is shown in Figure 8. The luminophore obtained in the above example emits light in the range of 475 - 530 nm when excited with radiation in the range of 250 - 390 nm. Spectroscopic characteristics are shown in Figures 9 - 10. Green luminescence is the result of characteristic 4f-4f transitions of terbium ions.

The compounds obtained in the present invention may be used in photonic active components (e.g., lasers, modulators).

### References

[1] X.Chen, Y.Liu, D. Tu, Lanthanide-Doped Luminescent Nanomaterials. From Fundamentals to Bioapplications, Springer, 2014, ISBN 978-3-642-40363-7.
[2] K.Huang, N.M. Idris, Y. Zhang, Engineering of Lanthanide-Doped Upconversion Nanoparticles for Optical Encoding, small, 2016, 12, 7, 836-852. DOI: https://doi.org/10.1002/smll.201502722
[3] S. Buddhudu, C.H. Kam, S.L. Ng, Y. LLam, B. So, Y. Zhou, K.S. Wong, U. Rambabu, Green color luminescence in Tb3+: (La,Ln)PO4 (Ln=Gd or Y) photonic materials, Materials Science and Engineering: B, 2000, 72, 1, 27-30. DOI: https://doi.org/10.1016/S0921-5107(00)00339-1
[4] N. Baccile , F. Babonneau , B. Thomas and T.Coradin, Introducing ecodesign in silica sol-gel materials, Journal of Materials Chemistry, 2009, 19, 8537-8559. DOI: https://doi.org/10.1039/B911123A
[5] G.E.Jellison Jr., L.A. Boatner, Chi Chen, Spectroscopic refractive indices of metalorthophosphates with the zircon-type structure, Optical Materials, 2000, 15, 103-109. DOI: https://doi.org/10.1016/S0925-3467(00)00027-6
[6] Y. Arinicheva, S. Neumeier, F. Brandt, D. Bosbach, G. Deissmann, Dissolution kinetics of synthetic LaPO4-monazite in acidic media, Scientific Basics for Nuclear Waste Menagement XLI, 2018, 3, 1133-1137. DOI: https://doi.org/10.1557/adv.2018.205
[7] K. N. Marsh, A. Deer, A. C. Wu, A. Klamt, Room Temperature Ionic Liquids as Replacements for Conventional Solvents - A Review, Korean Journal of Chemical Engineering, 2002, 19, 357-362. DOI: https://doi.org/10.1007/BF02697140
[8] J. Cybińska, C. Lorbeer, A. V. Mudring, Phosphate protected fluoride nano-phosphors, *Journal of Material Chemistry,* 2012, 22, 9505-9508. DOI: https://doi.org/10.1039/C2JM15471D
[9] J.Cybinska, M.Guzik, C.Lorbeer, E.Zych, Y.Guyot, G.Boulon, A.V.Mudring, Design of LaPO4:Nd3+ materials by using ionic liquids, Optical. Materials, 2017, 63, 76-87. DOI: https://doi.org/10.1016/j.optmat.2016.09.025
[10] J. Cybinska, C. Lorbeer, A.V. Mudring, Ionic liquid assisted microwave synthesis route towards color-tunable luminescence of lanthanide-doped BiPO4, Journal of Luminescence, 2016, 170, 641-647. DOI: https://doi.org/10.1016/j.jlumin.2015.06.051
[11] E. Banks,Y. Okamoto,Y. Ueba, Synthesis and characterization of rare earth metal-containing polymers. I. Fluorescent properties of ionomers containing Dy3+, Er3+, Eu3+, and Sm3+, Journal of Applied Polymers, 1980, 25, 3, 259-368. DOI: https://doi.org/10.1002/app.1980.070250303
[12] D. Dong, S.Jiang, Y.Men, X.Ji, B.Jiang, Nanostructured Hybrid Organic±Inorganic Lanthanide Complex Films Produced In Situ via a Sol-Gel Approach, Advanced Materials, 2000, 12, 9, 646 - 649. DOI: https://doi.org/10.1002/(SICI)1521-4095(200005)12:9<646::AID-ADMA646>3.0.CO;2-W
[13] B. An, P. Liu, J. Shi, M. Gong, Y. Yang N. Xu, Preparation, photoluminescence and thermal stability of sodium tris(pyridine dicarboxylato) europate(III) complex incorporated into silica matrix, Journal of Materials Science: Materials in Electronics, 2003, 14, 125-128. DOI: https://doi.org/10.1023/A:1022363305343
[14] Y. Li B. Yan, Lanthanide (Eu3+, Tb3+)/β-Diketone Modified Mesoporous SBA-15/Organic Polymer Hybrids: Chemically Bonded Construction, Physical Characterization, and Photophysical Properties, Inorganic Chemistry, 2009, 48, 17, 8276-8285. DOI: https://doi.org/10.1021/ic900971h
[15] L. R. Matthews, E. T. Knobbe, Luminescence Behavior of Europium Complexes in Sol-Gel Derived Host Materials, Chemistry of Materials, 1993, 5, 1697-1700. DOI: https://doi/10.1021/cm00036a005

## Claims

1. A sol-gel-structured photonic layer comprising a matrix doped with nanoparticles of inorganic lanthanide compounds **characterised in that** the material matrix is silicon oxide, wherein the inorganic lanthanide compounds are lanthanide phosphates at a concentration ranging between 0.1 wt % to 5 wt % relative to the silicon oxide, wherein the nanoparticles have been prepared *in situ* using an ionic liquid comprising a dihydrogen phosphate anion.

2. The photonic layer of claim 1, **characterised in that** a lanthanide phosphate is selected from the group comprising: europium phosphate, terbium phosphate, gadolinium phosphate, or mixtures thereof.

3. The photonic layer of claim 2, **characterised in that** europium phosphate at a concentration of 3 wt % is used, wherein the photonic layer exhibits radiation emission in the wavelength range of 575 - 725 nm when excited with radiation at a wavelength in the range of 250 - 325 nm, 350 - 420 nm.

4. The photonic layer of claim 2, **characterised in that** terbium phosphate at a concentration of 3 wt % is used, wherein the photonic layer exhibits radiation emission in the wavelength range of 475 - 530 nm when excited with radiation at a wavelength in the range of 250 - 390 nm.

5. The photonic layer of claim 2, **characterised in that** gadolinium phosphate at a concentration of 5 wt % and doped with neodymium at a concentration of 3 mol% relative to Gd (Gd_{0.97}Nd_{0.03}PO₄) is used, wherein the photonic layer exhibits radiation emission in the wavelength range of 850 - 950 nm when excited with radiation at a wavelength of 275 nm.

6. The photonic layer according to any one of claims 1 to 5, **characterised in that** it is transparent.

7. The photonic layer according to any one of claims 1 to 6, **characterised in that** it is in the form of xerogel deposited on a substrate selected from the group comprising silicon and glass substrates.

8. A method for obtaining the photonic layer as defined in any one of claims 1-7, **characterised in that** it comprises the following steps:
a) hydrolysing alkoxysilane and condensing the prepared product in an acidic environment in ethanol to prepare a sol, wherein a volume ratio of alcohol to alkoxysilane is 1:1;
b) adding to the sol obtained in step a) an ionic liquid at a concentration of 0.02 mol/dm³ - 0.03 mol/dm³ and containing a dihydrogen phosphate anion in a mixture of ethyl alcohol and water in a volume ratio of 2:1;
c) adding to the sol obtained in step b) a lanthanide salt at a concentration of 0.1 wt % to 5 wt % of the lanthanide salt relative to the silicon;
d) applying the resulting material of step c) to a substrate to prepare a photonic layer; wherein in steps a) - c) the reaction was carried out with stirring.

9. The method according to claim 8, **characterised in that** the acidic environment in step a) means the pH of the solution in the range of 2.0 - 3.0 obtained using a 0.01 M hydrochloric acid solution.

10. The method according to claim 8 or 9, **characterised in that** alkoxide is tetraethoxysilane.

11. The method according to any one of claims 8 to 10, **characterised in that** the ionic liquid is selected from the group comprising: choline dihydrogen phosphate and imidazole dihydrogen phosphate.

12. The method according to any one of claims 8 to 11, **characterised in that** the lanthanide salt is selected from the group comprising lanthanide phosphate and nitrate, wherein the lanthanide is selected from the group comprising: europium, gadolinium, terbium, or mixtures thereof.

13. The method according to any of the claims 8 to 12, **characterised in that** in step d), the material in the form of xerogel is prepared.

14. The method according to any one of claims 8 to 13, **characterised in that** step a) was carried out for 1 to 3 hours with stirring at 400 - 600 rpm; step b) for 15 to 45 minutes with stirring at 400 - 600 rpm; step c) for 11 to 14 hours with stirring at 800 - 1200 rpm; wherein steps a) to d) are carried out at room temperature, in air atmosphere.

15. The method according to any one of claims 8 to 14, **characterised in that** the substrate is selected from the group comprising glass and silicon substrates.
